# EUROPEAN PATENT SPECIFICATION

(11) **EP 3 124 897 B1**
(45) Date of publication and mention of the grant of the patent: **21.02.2018**
(21) Application number: 15178485.7
(22) Date of filing: 27.07.2015
(51) Int. Cl.: F25B 49/02, F25B 13/00, F25B 30/02

(54) **METHODS AND APPARATUS FOR VAPOR COMPRESSION CIRCUIT CONTROL**
VERFAHREN UND VORRICHTUNG ZUR DAMPFKOMPRESSIONSSCHALTKREISSTEUERUNG
PROCÉDÉS ET APPAREIL DE COMMANDE DE CIRCUIT DE COMPRESSION DE VAPEUR

(43) Date of publication of application: 01.02.2017
(73) Proprietor: Honeywell spol s.r.o., 14800 Prague 4 (CZ)
(72) Inventor: TRNKA, Pavel, Morristown, NJ 07962-2245 (US); HAVLENA, Vladimir, Morristown, NJ 07962-2245 (US); MCGAHAN, Paul, Morristown, NJ 07962-2245 (US)
(74) Representative: Houghton, Mark Phillip

(56) References cited:
- EP-A1- 0 883 046
- US-A1- 2011 209 486
- US-A1- 2012 253 543
- US-A1- 2013 186 119
- US-A1- 2013 247 601

## Description

### Background

Vapor compression circuits are generally used in devices transporting heat from low temperature reservoirs (e.g. outdoor air) to high temperature reservoirs (e.g. hydronic heating water) by using mechanical and/or electrical energy input. Typical examples are heat pumps, refrigerators and air-conditioners ranging from household units to sophisticated industrial sized devices. The objective of the vapor compression circuit design and control is to transport the heat with the highest efficiency. This efficiency can be characterized by a ratio of transported heat to overall mechanical and/or electrical energy consumption (e.g. compressor electric power consumption). This ratio is for example denoted as the Coefficient Of Performance (COP) for heat pumps.

Vapor compression circuits are constructed from multiple components - mainly compressors, condensers, expansion valves and evaporators. The circuits are typically constructed and optimized for operation under nominal conditions. Modern constructions allow efficient operation on multiple load levels (heat demand) and under changing conditions (e.g. ambient temperature, ambient humidity for air-to-water heat pump) by using modulating components (modulating compressor, digital compressor, evaporator with modulating fan, electronic expansion valve, modulating hydronic pump) and sophisticated components such as modulating compressors with Enhanced Vapor Injection (EVI compressor), etc. This for example allows reaching a higher seasonal (overall) COP for heat pumps.

The heat transport efficiency is mainly determined by the quality of the components (mechanical, electrical and heat losses), but also by the performance of control and optimization strategy with respect to the actual load level and operation conditions. A typical vapor compression circuit control configuration has an independent Single Input and Single Output (SISO) control loop for each modulating component.

US2013/186119 discloses a control system adaptively controlling an operation of a vapor compression system by mapping relationship between control inputs of the vapor compression system and executing a supervisory controller and an optimization controller.

### Summary

The present invention provides a vapor compression circuit controller and a method for operating a vapor compression circuit as defined in the appended claims.

Methods and apparatus are provided for receiving vapor compression circuit sensor data from multiple sensors, estimating a state of the vapor compression circuit, dynamic constraints and unmeasurable disturbances, and controlling set-points of multiple modulated components of the vapor compression circuit via a multivariable controller. In some examples, set-point optimization can use offline developed data such as optimization data from a look-up table.

### Brief Description of the Drawings

FIG. 1 is a block diagram illustrating a coordinated control of a vapor compression circuit according to an example embodiment.
FIG. 2 illustrates generally a block diagram of a multivariable controller and optimizer according to an example embodiment.
FIG. 3A illustrates generally a high-level flow chart of an on-line method portion for providing control of a vapor compression circuit according to an example embodiment.
FIG. 3B illustrates generally a high-level flow chart of an off-line method portion for providing control of a vapor compression circuit according to an example embodiment.
FIG. 4 is a block diagram illustrating processing circuitry to perform methods according to example embodiments.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software. The software may consist of computer executable instructions stored on computer readable storage media such as memory or other type of hardware based storage devices, either local or networked or carried on computer readable carrier medium, comprising a storage medium, or a transmission medium such as an electrical signal, an electromagnetic signal or an optical signal. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor.

Vapor compression circuits are generally used in devices transporting heat from low temperature reservoirs (e.g. outdoor air) to high temperature reservoirs (e.g. hydronic heating water) by using mechanical and/or electrical energy input. Typical examples are heat pumps, refrigerators and air-conditioners ranging from household units to sophisticated industrial sized devices. The objective of the vapor compression circuits design and control is to transport the heat with the highest efficiency. This efficiency can be characterized by a ratio of transported heat to overall mechanical and/or electrical energy consumption (e.g. compressor electric power consumption). This ratio is for example denoted as the Coefficient Of Performance (COP) for heat pumps.

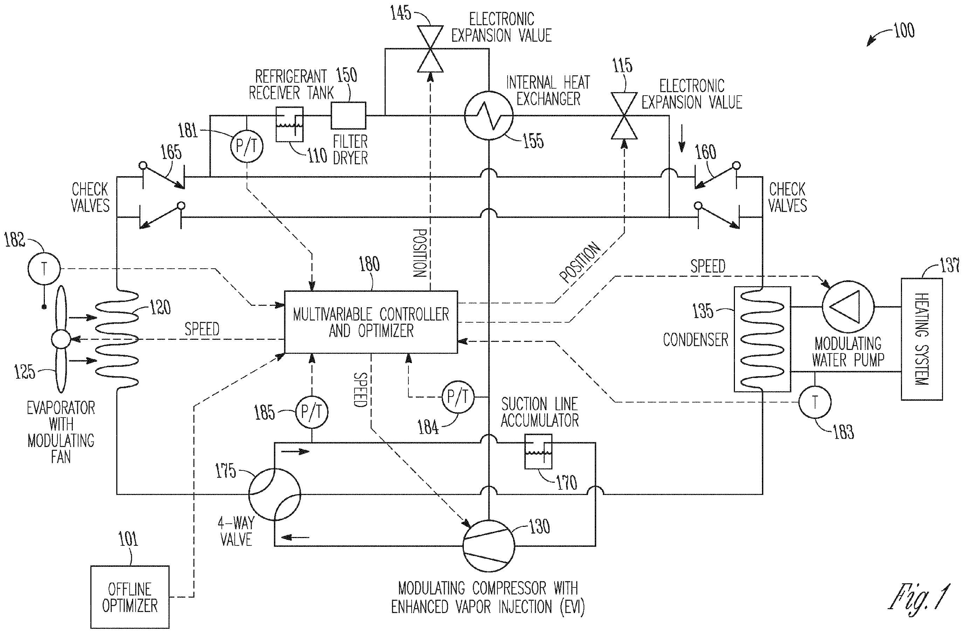

A vapor compression circuit 100 is illustrated in block flow form in FIG. 1. Vapor compression circuit 100 in one embodiment is constructed of multiple components, and may operate as an advanced heat pump. A refrigerant is used in the circuit 100 and may be stored in a refrigerant receiver tank 110. The refrigerant is sent through an electronically controlled expansion valve 115 that expands the refrigerant into gas form, and in the process, lowering the temperature of the refrigerant. Expansion valves each have a controllable position which is used to control the amount of expansion of a fluid passing through the valves. The cooled refrigerant than progresses through an evaporator 120 having a fan 125 controlled via a fan speed normally expressed in rotations per minute to cool air moving past evaporator heat exchanger surface.

The process of flowing air past the heat exchanger surface also raises the temperature of the refrigerant, which is then compressed via a modulating compressor 130 having a controllable speed, which may have enhanced vapor injection. The compressed refrigerant is then sent to a condenser 135. The condenser 135 may be coupled to transfer heat between the condenser 135 and water from a hydronic heating system 137 via a water pump 140 having a controllable pump speed, and return line 141. The refrigerant at this point may be mostly in liquid form, and is collected in receiver tank 110.

A second electronically controlled thermal expansion valve 145 may also be coupled to the refrigerant receiver tank, and be used to cool the compressor 130 in some embodiments. A filter dryer may also be included as indicated at 150 between the receiver tank 110 and expansion valves 115 and 145. An internal heat exchanger indicated at 155 may also be placed following each of the expansion valves 115, 145 in some embodiments. Check valves indicated at 160 and 165 may also be used to control the flow of refrigerant.

In further embodiments, a suction line accumulator 170 may be placed between the evaporator 120 and compressor 130. A four way valve 175 may also be used to route refrigerant between the evaporator, compressor, and condenser.

A controller 180 may be coupled to multiple of the above components to control the components and overall operation of the circuit 100 to optimized efficiency. Circuit 100 provides for efficient operation on multiple load levels and under changing conditions. A higher seasonal (overall) efficiency may be obtained for heat pumps such as circuit 100 by using modulating components (modulating compressor, digital compressor, evaporator with modulating fan, electronic expansion valves, modulating hydronic pump, and sophisticated components such as modulating compressors with an Enhanced Vapor Injection (EVI compressor).

The heat transport efficiency is mainly determined by the quality of the components (mechanical, electrical and heat losses), but also by the performance of control and optimization strategy with respect to the actual load level (e.g. heat demand) and operation conditions. A typical vapor compression circuit control configuration has an independent Single Input and Single Output (SISO) control loop for each modulating component.

Current SISO control strategies utilized for individual components are not able to fully utilize the additional degrees of freedom for energy efficiency optimization provided by the modulating components. Such individual component based control cannot achieve and keep maximum energy efficiency under variable load and disturbances such as outdoor air temperature and humidity change, evaporator icing, and return hydronic water temperature change when the circuit 100 is operating as a heat pump.

The individual control loops in one embodiment are replaced by a multivariable controller 180 that covers the interactions between individual manipulated variables. Model-based predictive control (MPC) technology with embedded steady-state values optimization can be used to cover the required functionality.

The controller 180 in one embodiment collects sensor data from all available sensors, which may typically be very limited. Typical sensors may include temperature sensors and pressure sensors. Example sensors include pressure and temperature sensor 181 coupled between tank 110 and check valves 165, temperature sensor 182 coupled to sense air temperature entering evaporator 120, temperature sensor 183 coupled to return line 141, pressure and temperature sensor 184 coupled between heat exchanger 155 and compressor 130, and pressure and temperature sensor 185 coupled between four way valve 185 and suction line accumulator 170. The sensors are coupled in a wired or wireless manner to provide data representative of sensed parameters to controller 180. Additional or fewer sensors may be used in further embodiments.

The sensor data can be processed by a Kalman filter to estimate the current state of the vapor compression circuit and to estimate unmeasurable disturbances. The state and the disturbances are used by the controller acting as an optimizer to determine modulating component set-points with the highest overall efficiency under current load and conditions. The set-points are supplied to the multivariable controller 180 (e.g. model predictive controller), which keeps the set-points while eliminating the influence of disturbances and model uncertainty by feedback control action.

In certain examples, the system can include an offline optimization processor or an offline result 101 that can provide a comprehensive data structure that can allow the multivariable controller and optimizer 180 to efficiently select a control trajectory representing the most efficient operation of the system 100. In certain examples, the comprehensive data structure can include a lookup table type structure such that for received sensor readings or information, demand information, and constraint information at the controller 180, a set of control manipulated variable set-points can be derived from the data structure that represents the most efficient operating point of the system 100.

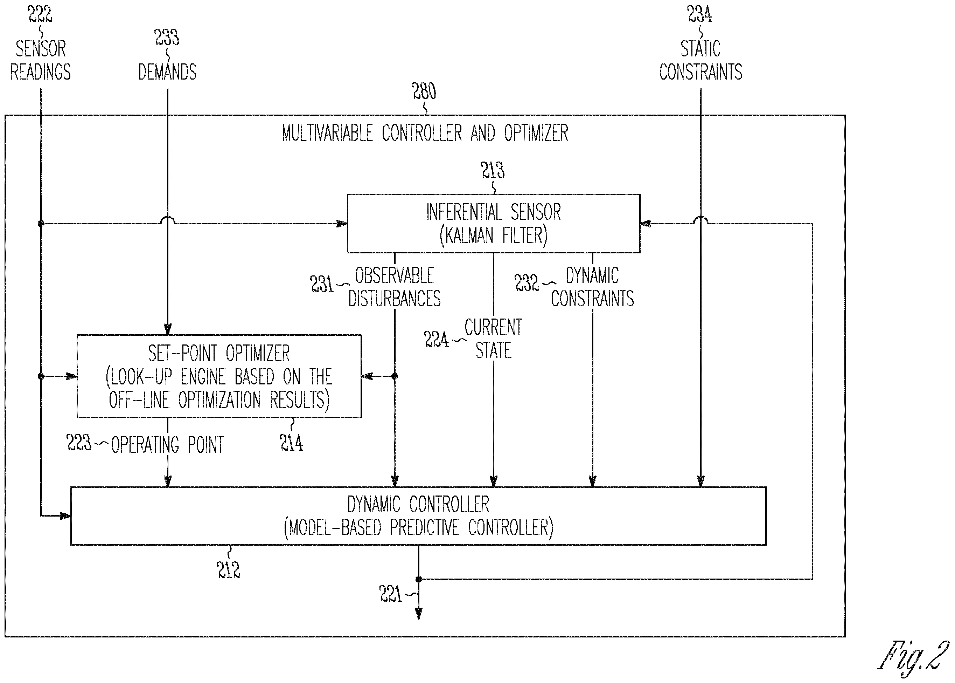

FIG. 2 illustrates generally an example of a multivariable controller and optimizer 280. In certain examples, the controller 280 includes a dynamic controller 212, an inferential sensor 213 and a set-point optimizer 214. In certain examples, the dynamic controller 212 executes a control algorithm that provides set-point information 221 for the various controllable devices of a vapor compression system. In some examples, the inferential sensor 213 recieves a number of inputs, including but not limited to, sensor readings 222, and set-point information 223 provided by the dynamic controller. The inferential sensor 213 uses the various inputs to provide information to the dynamic controller 212. In certain examples, the inferential sensor 213 uses the various inputs to quantify a current state 224 of the vapor compression system, to provide an indication of observable disturbances 231, and to provide an indication of dynamic constraints 232 that may affect the performance or stability of the vapor compression system. In certain examples, the sensor readings 222 or sensor information can include physical quantity readings from sensors located on the vapor compression circuit, such as, but not limited to, compressor discharge temperature, evaporating pressure, condensing pressure, outside air temperature, hydronic heating return water temperature, etc. Observable disturbances 231 can include variables that cannot be directly measured, but can be inferred or estimated from sensor readings or set-point information such as, but not limited to heat exchanger performance degradation by ice formation, refrigerant leakage, etc. The current state information 224 can include model state variables of the vapor compression system determined from the sensor readings. such as, but not limited to a position of phase boundaries in heat exchangers, heat accumulation in heat exchanger metals, etc. The dynamic constraints 232 can include variables indicative of, but not limited to, critical refrigerant mass flow to the evaporator, for example.

In certain examples, the set-point optimizer 214 processes a number of inputs as well as a user selectable demands 233, such as a heat demand, a cooling demand, system water temperature, etc,. to provide an operating set-point 223 to the dynamic controller 212. The operating set-point 223 represents a point along the most efficient operating trajectory for maintaining or meeting the selectable demands 223. In addition to receiving sensor information 222, the set-point optimizer also receives observable disturbance variables 231 provided by the inferential sensor 213. In certain examples, the set-point optimizer 214 receives a comprehensive data structure from an offline optimization processor to assist in selecting the most efficient operating trajectory as well as providing the proper point along that trajectory to the dynamic controller.

As discussed above, the dynamic controller 212 executes a control algorithm that provides set-point information 221 for the various controllable devices of a vapor compression system. In certain examples, the control algorithm uses the sensor information 222 from the sensors on the vapor compression system, static constraints 234 of the devices of the vapor compression system, the operating point 223 from the set-point optimizer 214, and the current state information 224, the observable disturbance information 231 and the dynamic disturbance information 232 from the inferential sensor 213 to provide the set-point information 221 for the various controllable devices. In certain examples, the static constraints 234 includes time independent operation constraints of individual components of the system, for example, but not limited to maximum compressor discharge temperature, compressor pressure envelope, compressor speed range, expansion valve position range, fan speed range, etc. In certain examples, the set-points 221 provided by the dynamic controller 212 can be received by various system devices and can include, but are not limited to, compressor rotation speed, expansion valve position, evaporator fan rotation speed, etc.

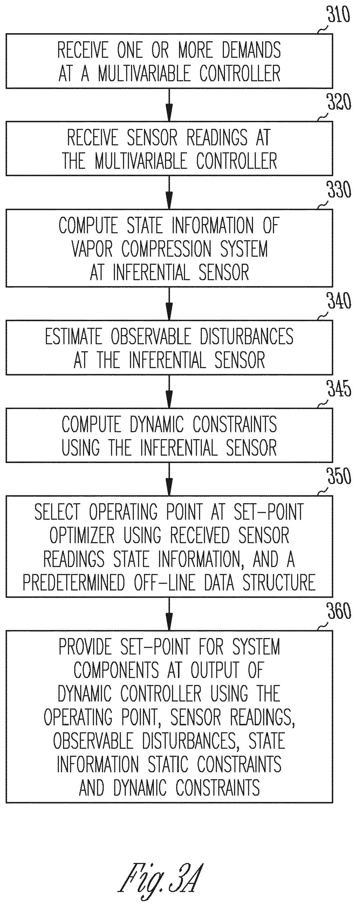

FIG. 3A is a flowchart illustrating an example computer implemented method 300 of optimizing and controlling a vapor compression circuit. Method 300 receives a heat demand at 310. At 320, vapor compression circuit sensor data is received from multiple sensors. An estimate of a state of the vapor compression circuit is computed at 330 using an inferential sensor, optionally applying a Kalman filter to the sensor data prior to estimating the state of the vapor compression circuit. At 340, an estimate of observable disturbances of the vapor compression circuit is computed using the inferential sensor. At 345, dynamic constraints that can interfere with system performance or system stability is computed using the inferential sensor. At 350, an optimized operating point is selected from a predetermined data structure of a set-point optimizer. Selection of the optimized operating point is based on received sensor information and observable disturbance information received from the inferential sensor. At 360, set-points of multiple modulated components of the vapor compression circuit are controlled to reach and maintain the optimized operating point via a dynamic controller to eliminate an influence of disturbances and model uncertainty by multivariable feedback control action.

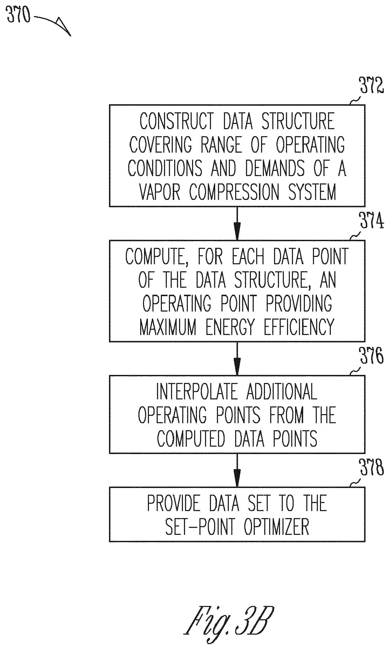

FIG. 3B illustrates generally a flowchart of an example offline method 370 for providing the predetermined data structure of the set-point optimizer. At 372, data point structure can be constructed that covers wide range of operating conditions and demands of a vapor compression system. At 374, an optimal operating point for maximizing energy efficiency of vapor compression system can be computed for each data point in the data point structure. At 376, optimal operating points can be interpolated from the data point structure resulting to a set of coefficients for interpolation function. The interpolation function can be in one example multivariable polynomial or Gaussian process interpolation. At 378, either an entire data set with optimal points or interpolation result can be provided to the online set-point optimizer. The entire data set can be, for example, in a form of a multi-variable look-up table. The interpolation result can be, for example, in a form of coefficients for interpolation function. In some examples, model-base optimization can be used to compute each data point of the data point structure. Providing at least a portion of the optimization of the vapor compression system in an offline environment allow better performance and resource utilization of the dynamic controller for maintaining , achieving and providing stable vapor compression system control.

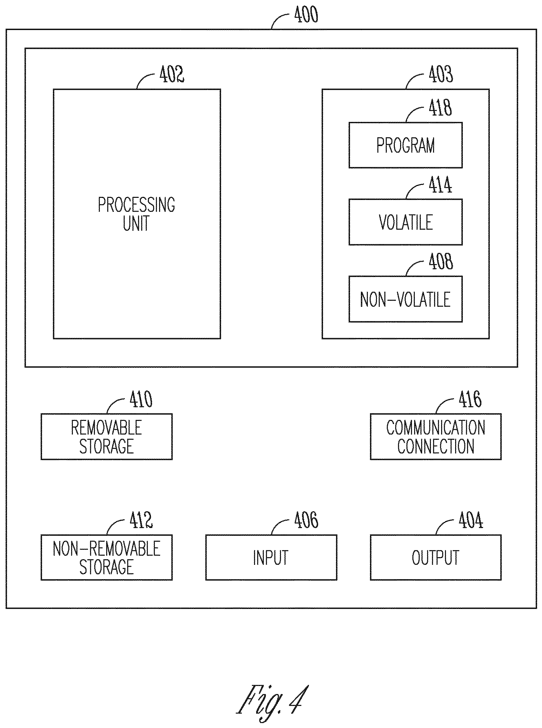

FIG. 4 is a block schematic diagram of a computer system 400 to implement a controller according to an example embodiment. The controller 180 may be implemented using fewer components than shown in FIG. 6 as may be typically found in process control facilities. One example computing device in the form of a computer 400 may include a processing unit 402, memory 403, removable storage 410, and non-removable storage 412. Memory 403 may include volatile memory 414 and non-volatile memory 408. Computer 400 may include - or have access to a computing environment that includes - a variety of computer-readable media, such as volatile memory 414 and non-volatile memory 408, removable storage 410 and non-removable storage 412. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 400 may include or have access to a computing environment that includes input 406, output 404, and a communication connection 416. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 402 of the computer 400. A hard drive, CD-ROM, and RAM are some examples of articles including a non-transitory computer-readable medium. For example, a computer program 418 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 400 to provide generic access controls in a COM based computer network system having multiple users and servers.

### Embodimenets

In Embodiment 1, a vapor compression circuit controller is configured to receive sensor information from a plurality of sensors of a vapor compression circuit, to receive energy demand information from a user interface of the vapor compression circuit, to receive static constraint information from an offline configuration tool, and to provide control command information to a plurality of control devices of the vapor compression circuit to transfer energy commensurate with the energy demand, the vapor compression circuit. The vapor compression controller includes an inferential sensor configured to receive the sensor information and the control command information and to provide disturbance estimation information, current state information and dynamic constraint information of the vapor compression circuit, a set-point optimizer configured to receive energy demand information, the sensor information and the disturbance estimation information and to identify a maximum efficiency operating point using the energy demand information, the sensor information and the disturbance information, and a dynamic controller configured to process the sensor information, the maximum efficiency operating point, the disturbance estimation information, the current state information and the dynamic constraint information, to provide the control commands configured to take the vapor compression circuit from a current state defined by the current state information to an operating point defined by the maximum efficiency operating point, and to provide the command information of the control command information to the plurality of control devices.

In Embodiment 2, the set-point optimizer of Embodiment 1 is configured to identify a maximum efficiency operating point optionally from a lookup table of operating points or from an interpolation of this lookup table by an interpolation function parameterized by a set of coefficients.

In Embodiment 3, the set-point optimizer of any one or more of Embodiments 1-2 optionally is configured to receive the look-up table of operating points or to receive a set of interpolation function coefficients from an offline processor or optimizer.

In Embodiment 4, the disturbance estimation information of any one or more of Embodiments 1-3 optionally includes an indication of ice build-up on a system component

In Embodiment 5, the disturbance estimation information of any one or more of Embodiments 1-4 optionally includes an indication of refrigerant leakage.

In Embodiment 6, the dynamic constraint information of any one or more of Embodiments 1-5 optionally includes an indication of instability inducing refrigerant mass flow to an evaporator.

In Embodiment 7, a method for operating a vapor compression circuit according to claim 7.

In Embodiment 8, the identifying a maximum operating point of the vapor compression circuit of any one or more of Embodiments 1-7 includes identifying the maximum operating point optionally either from a look-up table of operating points or from an interpolation function. Look-up table or coefficients of interpolation function are stored in memory of the set-point optimizer.

In Embodiment 9, the method of any one or more of Embodiments 1-8 optionally includes receiving look-up table information or look-up table interpolation function coefficients information from an off-line analysis system.

In Embodiment 10, the method of any one or more of Embodiments 1-9 optionally includes analyzing the vapor compression circuit using the offline analysis system to provide the look-up table information or look-up table interpolation function coefficients.

In embodiment 11, the analyzing of any one or more of Embodiments 1-10 optionally includes constructing a grid of sensor information representative of range of operating conditions and demands for the vapor compression circuit, for each discrete sensor data point of the grid of sensor information, determining an optimal operating point representative of maximum energy efficiency, interpolating additional optimal operating points using the determined optimal operating points, and assembling the look-up table information using the determined optimal operating points and the additional operating points. In Embodiment 12, an apparatus can include a computer readable carrier medium carrying computer readable code for controlling a computer to carry out the method of any one of claims 7-11.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method embodiments described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

## Claims

1. A vapor compression circuit controller (180) configured to receive sensor information (222) from a plurality of sensors of a vapor compression circuit (100), to receive energy demand information (233) from a user interface of the vapor compression circuit (100), to receive static constraint information (234) from an offline configuration tool, and to provide set-point information (221) to a plurality of control devices of the vapor compression circuit (100) to transfer energy commensurate with the energy demand, the vapor compression circuit controller (180) comprising:
an inferential sensor (213) configured to receive the sensor information (222) and the set-point information (221) and to provide predictive disturbance information (231), current state information (224) and dynamic constraint information (232) of the vapor compression circuit (100);
a set-point optimizer (214) configured to receive energy demand information (233), the sensor information (222) and the predictive disturbance information (231) and to identify a maximum efficiency operating point (223) using the energy demand information (233), the sensor information (222) and the disturbance information (231); and
a dynamic controller (212) configured to process the static constraint information (234), the sensor information (222), the maximum efficiency operating point (223), the predictive disturbance information (231), the current state information (224) and the dynamic constraint information (232), to provide the set-point information (221) configured to take the vapor compression circuit (100) from a current state defined by the current state information to an operating point defined by the maximum efficiency operating point, and to provide the set-point information (221) to the plurality of control devices.

2. The vapor compression circuit controller of claim 1, wherein the set-point optimizer (214) is configured to identify a maximum efficiency operating point from a lookup table of operating points.

3. The vapor compression circuit controller of claim 2, wherein the set-point optimizer (214) is configured to receive the look-up table of operating points from an offline processor.

4. The vapor compression circuit controller of claim 1, wherein the predictive disturbance information (231) includes an indication of ice build-up on a system component

5. The vapor compression circuit controller of claim 1, wherein the predictive disturbance information (231) includes an indication of refrigerant leakage.

6. The vapor compression circuit controller of claim 1, wherein the dynamic constraint information (232) includes an indication of instability inducing refrigerant mass flow to an evaporator.

7. A method for operating a vapor compression circuit (100), the method comprising:
receiving (310) a heat demand (233) at a set-point optimizer (214) of a vapor compression circuit controller (180);
receiving (320) vapor compression circuit sensor data (222) from multiple sensors at the set-point optimizer (214), an inferential sensor (213) and a multivariable model based controller (212) of the vapor compression circuit controller (180);
estimating (330) a state (224) of the vapor compression circuit (100) at the inferential sensor (213) using the vapor compression circuit sensor data (222) and set-point information (221);
estimating (340) unmeasurable disturbance information (231) of the vapor compression circuit (100) at the inferential sensor (213) using the vapor compression circuit sensor data (222) and the set-point information (221);
estimating (345) dynamic constraints (232) of the vapor compression circuit (100) at the inferential sensor (213) using the vapor compression circuit sensor data (222) and the set-point information (221);
identifying (350) a maximum operating point (223) of the vapor compression circuit (100) at the set-point optimizer (214) using the heat demand information (233), the vapor compression circuit sensor data (222) and the unmeasurable disturbance information (231); and
providing (360) the set-point information (221) for multiple modulated components of the vapor compression circuit (100) at the multivariable model based controller (212) using the maximum operating point (223), the unmeasurable disturbance information (231), the state (224) of the vapor compression circuit (100), the dynamic constraints (232), and static constraint information (234) received from an offline configuration tool.

8. The method of Claim 7, wherein identifying (350) a maximum operating point of the vapor compression circuit (100) includes identifying the maximum operating point from a look-up table of operating points stored in memory of the set-point optimizer (214).

9. The method of claim 8, including receiving look-up table information from an off-line analysis system.

10. The method of claim 9, including analyzing the vapor compression circuit (100) using the offline analysis system to provide the look-up table information.

11. The method of claim 9, wherein the analyzing includes:
constructing (372) a grid of sensor information representative of range of operating conditions and demands for the vapor compression circuit (100);
for each discrete sensor data point of the grid of sensor information, determining (374) an optimal operating point representative of maximum energy efficiency;
interpolating (376) additional optimal operating points using the determined optimal operating points; and
assembling (378) the look-up table information using the determined optimal operating points and the additional operating points.

12. A computer readable carrier medium carrying computer readable code for controlling a computer to carry out the method of any one of claims 7 to 11.

## Patentansprüche

1. Dampfkompressionskreissteuereinheit (180), die konfiguriert ist, Sensorinformationen (222) von mehreren Sensoren eines Dampfkompressionskreises (100) zu empfangen, Energiebedarfsinformationen (233) von einer Anwenderschnittstelle des Dampfkompressionskreises (100) zu empfangen, Informationen (234) einer statischen Abhängigkeit von einem Offline-Konfigurationswerkzeug zu empfangen und Sollwertinformationen (221) für mehrere Steuervorrichtungen des Dampfkompressionskreises (100) bereitzustellen, um Energie entsprechend dem Energiebedarf zu übertragen, wobei die Dampfkompressionskreissteuereinheit (180) Folgendes umfasst:
einen Inferenzsensor (213), der zum Empfangen der Sensorinformationen (222) und der Sollwertinformationen (221) und zum Bereitstellen von vorausschauenden Störinformationen (231), aktuellen Zustandsinformationen (224) und Informationen (232) einer dynamischen Abhängigkeit des Dampfkompressionskreises (100) konfiguriert ist;
einen Sollwertoptimierer (214), der zum Empfangen von Energiebedarfsinformationen (233), der Sensorinformationen (222) und der vorausschauenden Störinformationen (231) und zum Erkennen eines Betriebspunkts (223) mit maximalem Wirkungsgrad unter Verwendung der Energiebedarfsinformationen (233), der Sensorinformationen (222) und der Störinformationen (231) konfiguriert ist; und
eine dynamische Steuereinheit (212), die konfiguriert ist, die statischen Abhängigkeitsinformationen (234), die Sensorinformationen (222), den Betriebspunkt (223) mit maximalem Wirkungsgrad, die vorausschauenden Störinformationen (231), die aktuellen Zustandsinformationen (224) und die dynamischen Abhängigkeitsinformationen (232) zu verarbeiten, um die Sollwertinformationen (221) bereitzustellen, die konfiguriert sind, den Dampfkompressionskreis (100) von einem aktuellen Zustand, der durch die aktuellen Zustandsinformationen definiert ist, auf einen Betriebspunkt, der durch den Betriebspunkt mit maximalem Wirkungsgrad definiert ist, zu bringen, und die Sollwertinformationen (221) für die mehreren Steuervorrichtungen bereitzustellen.

2. Dampfkompressionskreissteuereinheit nach Anspruch 1, wobei der Sollwertoptimierer (214) konfiguriert ist, einen Betriebspunkt mit maximalem Wirkungsgrad aus einer Nachschlagetabelle mit Betriebspunkten zu erkennen.

3. Dampfkompressionskreissteuereinheit nach Anspruch 2, wobei der Sollwertoptimierer (214) konfiguriert ist, die Nachschlagetabelle mit Betriebspunkten von einem Offline-Prozessor zu empfangen.

4. Dampfkompressionskreissteuereinheit nach Anspruch 1, wobei die vorausschauenden Störinformationen (231) eine Angabe zur Eisbildung auf einer Systemkomponente enthalten.

5. Dampfkompressionskreissteuereinheit nach Anspruch 1, wobei die vorausschauenden Störinformationen (231) eine Angabe zu Kältemittelaustritt enthalten.

6. Dampfkompressionskreissteuereinheit nach Anspruch 1, wobei die dynamischen Abhängigkeitsinformationen (232) eine Angabe zu instabilitätsverursachendem Kältemittelmassenstrom zu einem Verdampfer enthalten.

7. Verfahren zum Betreiben eines Dampfkompressionskreises (100), wobei das Verfahren Folgendes umfasst:
Empfangen (310) eines Wärmebedarfs (233) bei einem Sollwertoptimierer (214) einer Dampfkompressionskreissteuereinheit (180);
Empfangen (320) von Dampfkompressionskreissensordaten (222) von mehreren Sensoren bei dem Sollwertoptimierer (214), einem Inferenzsensor (213) und einer multivariablen modellbasierten Steuereinheit (212) der Dampfkompressionskreissteuereinheit (180);
Schätzen (330) eines Zustands (224) des Dampfkompressionskreises (100) bei dem Inferenzsensor (213) unter Verwendung der Dampfkompressionskreissensordaten (222) und der Sollwertinformationen (221);
Schätzen (340) unmessbarer Störinformationen (231) des Dampfkompressionskreises (100) bei dem Inferenzsensor (213) unter Verwendung der Dampfkompressionskreissensordaten (222) und der Sollwertinformationen (221);
Schätzen (345) dynamischer Abhängigkeiten (232) des Dampfkompressionskreises (100) bei dem Inferenzsensor (213) unter Verwendung der Dampfkompressionskreissensordaten (222) und der Sollwertinformationen (221);
Erkennen (350) eines maximalen Betriebspunkts (223) des Dampfkompressionskreises (100) am Sollwertoptimierer (214) unter Verwendung der Wärmebedarfsinformationen (233), der Dampfkompressionskreissensordaten (222) und der unmessbaren Störinformationen (231); und
Bereitstellen (360) der Sollwertinformationen (221) für mehrere modulierte Komponenten des Dampfkompressionskreises (100) an der multivariablen modellbasierten Steuereinheit (212) unter Verwendung des maximalen Betriebspunkts (223), der unmessbaren Störinformationen (231), des Zustands (224) des Dampfkompressionskreises (100), der dynamischen Abhängigkeiten (232) und der Informationen (234) einer statischen Abhängigkeit, die von einem Offline-Konfigurationswerkzeug empfangen wurden.

8. Verfahren nach Anspruch 7, wobei das Erkennen (350) eines maximalen Betriebspunkts des Dampfkompressionskreises (100) das Erkennen des maximalen Betriebspunkts aus einer in einem Speicher des Sollwertoptimierers (214) gespeicherten Nachschlagetabelle mit Betriebspunkten umfasst.

9. Verfahren nach Anspruch 8, das das Empfangen von Nachschlagetabelleninformationen aus einem Offline-Analysesystem umfasst.

10. Verfahren nach Anspruch 9, das das Analysieren des Dampfkompressionskreises (100) mit dem Offline-Analysesystem, um die Nachschlagetabelleninformationen bereitzustellen, umfasst.

11. Verfahren nach Anspruch 9, wobei das Analysieren Folgendes umfasst:
Konstruieren (372) eines Rasters von für den Bereich der Betriebsbedingungen und Anforderungen für die Dampfkompressionskreis (100) repräsentativen Sensorinformationen;
für jeden diskreten Sensordatenpunkt des Rasters von Sensorinformationen Bestimmen (374) eines optimalen Betriebspunkts, der für maximale Energieeffizienz repräsentativ ist;
Interpolieren (376) zusätzlicher optimaler Betriebspunkte unter Verwendung der bestimmten optimalen Betriebspunkte; und
Zusammensetzen (378) der Nachschlagetabelleninformationen unter Verwendung der bestimmten optimalen Betriebspunkte und der zusätzlichen Betriebspunkte.

12. Computerlesbares Trägermedium, das computerlesbaren Code zum Steuern eines Computers, das Verfahren nach einem der Ansprüche 7 bis 11 auszuführen, trägt.

## Revendications

1. Commande (180) de circuit de compression de vapeur, configurée pour recevoir des informations (222) de capteurs en provenance d'une pluralité de capteurs d'un circuit (100) de compression de vapeur, pour recevoir des informations (233) de demande d'énergie en provenance d'une interface d'utilisateur du circuit (100) de compression de vapeur, pour recevoir des informations (234) de contraintes statiques en provenance d'un outil de configuration hors ligne, et pour fournir des informations (221) de point de consigne à une pluralité de dispositifs de commande du circuit (100) de compression de vapeur pour transférer une énergie comparable à la demande d'énergie, la commande (180) de circuit de compression de vapeur comportant :
un capteur inférentiel (213) configuré pour recevoir les informations (222) de capteurs et les informations (221) de point de consigne et pour fournir des informations prédictives (231) de perturbation, des informations (224) d'état actuel et des informations (232) de contraintes dynamiques du circuit (100) de compression de vapeur ;
un optimiseur (214) de point de consigne configuré pour recevoir des informations (233) de demande d'énergie, les informations (222) de capteurs et les informations prédictives (231) de perturbation et pour identifier un point (223) de fonctionnement à rendement maximal en utilisant les informations (233) de demande d'énergie, les informations (222) de capteurs et les informations (231) de perturbation ; et
une commande dynamique (212) configurée pour traiter les informations (234) de contraintes statiques, les informations (222) de capteurs, le point (223) de fonctionnement à rendement maximal, les informations prédictives (231) de perturbation, les informations (224) d'état actuel et les informations (232) de contraintes dynamiques, pour fournir les informations (221) de point de consigne configurées pour amener le circuit (100) de compression de vapeur d'un état actuel défini par les informations d'état actuel à un point de fonctionnement défini par le point de fonctionnement à rendement maximal, et pour fournir les informations (221) de point de consigne à la pluralité de dispositifs de commande.

2. Commande de circuit de compression de vapeur selon la revendication 1, l'optimiseur (214) de point de consigne étant configuré pour identifier un point de fonctionnement à rendement maximal à partir d'une table de consultation de points de fonctionnement.

3. Commande de circuit de compression de vapeur selon la revendication 2, l'optimiseur (214) de point de consigne étant configuré pour recevoir la table de consultation de points de fonctionnement en provenance d'un processeur hors ligne.

4. Commande de circuit de compression de vapeur selon la revendication 1, les informations prédictives (231) de perturbation comprenant une indication d'accumulation de glace sur un composant du système.

5. Commande de circuit de compression de vapeur selon la revendication 1, les informations prédictives (231) de perturbation comprenant une indication de fuite d'agent frigorigène.

6. Commande de circuit de compression de vapeur selon la revendication 1, les informations (232) de contraintes dynamiques comprenant une indication de débit massique d'agent frigorigène vers un évaporateur induisant une instabilité.

7. Procédé d'exploitation d'un circuit (100) de compression de vapeur, le procédé comportant les étapes consistant à :
recevoir (310) une demande (233) de chaleur au niveau d'un optimiseur (214) de point de consigne d'une commande (180) de circuit de compression de vapeur ;
recevoir (320) des données (222) de capteurs de circuit de compression de vapeur en provenance de capteurs multiples au niveau de l'optimiseur (214) de point de consigne, d'un capteur inférentiel (213) et d'une commande (212) basée sur un modèle à variables multiples de la commande (180) de circuit de compression de vapeur ;
estimer (330) un état (224) du circuit (100) de compression de vapeur au niveau du capteur inférentiel (213) en utilisant les données (222) de capteurs de circuit de compression de vapeur et les informations (221) de point de consigne ;
estimer (340) des informations (231) de perturbations non mesurables du circuit (100) de compression de vapeur au niveau du capteur inférentiel (213) en utilisant les données (222) de capteurs de circuit de compression de vapeur et les informations (221) de point de consigne ;
estimer (345) des contraintes dynamiques (232) du circuit (100) de compression de vapeur au niveau du capteur inférentiel (213) en utilisant les données (222) de capteurs de circuit de compression de vapeur et les informations (221) de point de consigne ;
identifier (350) un point (223) de fonctionnement maximal du circuit (100) de compression de vapeur au niveau de l'optimiseur (214) de point de consigne en utilisant les informations (233) de demande de chaleur, les données (222) de capteurs de circuit de compression de vapeur et les informations (231) de perturbations non mesurables ; et
fournir (360) les informations (221) de point de consigne pour des composants modulés multiples du circuit (100) de compression de vapeur au niveau de la commande (212) basée sur un modèle à variables multiples en utilisant le point (223) de fonctionnement maximal, les informations (231) de perturbations non mesurables, l'état (224) du circuit (100) de compression de vapeur, les contraintes dynamiques (232), et des informations (234) de contraintes statiques reçues en provenance d'un outil de configuration hors ligne.

8. Procédé selon la revendication 7, l'identification (350) d'un point de fonctionnement maximal du circuit (100) de compression de vapeur comprenant l'identification du point de fonctionnement maximal à partir d'une table de consultation de points de fonctionnement stockée dans la mémoire de l'optimiseur (214) de point de consigne.

9. Procédé selon la revendication 8, comprenant la réception d'informations de table de consultation en provenance d'un système d'analyse hors ligne.

10. Procédé selon la revendication 9, comprenant l'analyse du circuit (100) de compression de vapeur à l'aide du système d'analyse hors ligne pour fournir les informations de table de consultation.

11. Procédé selon la revendication 9, l'analyse comprenant les étapes consistant à :
construire (372) une grille d'informations de capteurs représentative d'une plage de conditions de fonctionnement et de demandes pour le circuit (100) de compression de vapeur ;
pour chaque point discret de données de capteurs de la grille d'informations de capteurs, déterminer (374) un point de fonctionnement optimal représentatif d'un rendement énergétique maximal ;
interpoler (376) des points de fonctionnement optimal supplémentaires en utilisant les points de fonctionnement optimal déterminés ; et
assembler (378) les informations de table de consultation en utilisant les points de fonctionnement optimal déterminés et les points de fonctionnement supplémentaires.

12. Support lisible par ordinateur, portant du code lisible par ordinateur destiné à commander un ordinateur pour réaliser le procédé selon l'une quelconque des revendications 7 à 11.
